# EUROPEAN PATENT SPECIFICATION

(11) **EP 4 382 862 B1**
(45) Date of publication and mention of the grant of the patent: **28.10.2026**
(21) Application number: 23198090.5
(22) Date of filing: 18.09.2023
(51) Int. Cl.: G01C 19/72

(54) **TRAVELLING WAVE RESONATOR WITH AT LEAST TWO CORES AND GYROSCOPE APPLICATIONS THEREOF**
WANDERWELLENRESONATOR MIT MINDESTENS ZWEI KERNEN UND GYROSKOPANWENDUNGEN DAMIT
RÉSONATEUR À ONDES PROGRESSIVES DOTÉ D'AU MOINS DEUX NOYAUX ET APPLICATIONS DE GYROSCOPE ASSOCIÉES

(30) Priority: 05.12.2022 US 202218061695
(43) Date of publication of application: 12.06.2024
(73) Proprietor: Honeywell International Inc., Charlotte, NC 28202 (US)
(72) Inventor: WU, Jianfeng, Charlotte, 28202 (US); PUCKETT, Matthew Wade, Charlotte, 28202 (US); TIN, Steven, Charlotte, 28202 (US); QIU, Tiequn, Charlotte, 28202 (US)
(74) Representative: Haseltine Lake Kempner LLP

(56) References cited:
- WO-A1-2023/276053
- US-B2- 10 312 658
- RASTOGI V ET AL: "Design and analysis of large-core high-GVD planar optical waveguide for dispersion compensation", APPLIED PHYSICS B ; LASERS AND OPTICS, SPRINGER, BERLIN, DE, vol. 105, no. 4, 29 July 2011 (2011-07-29), pages 821 - 824, XP019983629, ISSN: 1432-0649, DOI: 10.1007/S00340-011-4646-5
- HAMMER ET AL: "Resonant coupling of dielectric optical waveguides via rectangular microcavities: the coupled guided mode perspective", OPTICS COMMUNICATIONS, ELSEVIER, AMSTERDAM, NL, vol. 214, no. 1-6, 15 December 2002 (2002-12-15), pages 155 - 170, XP027328561, ISSN: 0030-4018, [retrieved on 20021215]

## Description

### BACKGROUND

The optical Kerr effect is a source of bias error in optical gyroscopes. The Kerr effect arises when energy intensity is sufficiently high; as a result a refractive index of a material changes with the energy intensity. A cavity resonator, with a high quality, or Q, factor or finesse, is particularly susceptible to the optical Kerr effect due to higher intracavity intensity¹ Intracavity intensity means optical power divided by mode area.. As a result, an optical gyroscope using a cavity resonator may suffer from undesirable bias error.
RASTOGI V ET AL: "Design and analysis of large-core high-GVD planar optical waveguide for dispersion compensation", APPLIED PHYSICS B; LASERS AND OPTICS, SPRINGER, BERLIN, DE, vol. 105, no. 4, 29 July 2011 (2011-07-29), pages 821-824 discloses a large-core high-GVD planar optical waveguide for dispersion compensation. HAMMER ET AL: "Resonant coupling of dielectric optical waveguides via rectangular microcavities: the coupled guided mode perspective", OPTICS COMMUNICATIONS, ELSEVIER, AMSTERDAM, NL, vol. 214, no. 1-6, 15 December 2002 (2002-12-15), pages 155-170, discloses resonant coupling of dielectric optical waveguides via rectangular microcavities.

### SUMMARY

A resonator configured to be mounted over a surface of a substrate, comprising: planar optical waveguide comprising: at least two cores, wherein the at least two cores are stacked in an axis perpendicular to the substrate, wherein at least one of: (a) a surface of one core adjacent to a surface of another core is separated by a first distance of more than twenty percent of a free space wavelength of an optical signal configured to propagate in the planar optical waveguide and (b) centers of each cross section, defined by core width and core thickness, of two adjacent cores are separated by a second distance three or more times the free space wavelength of the optical signal configured to be propagated in the planar optical waveguide; wherein each core has a thickness which is less than or equal to five percent of a free space wavelength of an optical signal configured to propagate in the planar optical waveguide, wherein the thickness means a dimension along an axis perpendicular to the surface, of the substrate, under the resonator, and wherein width means a dimension along another axis substantially perpendicular to the axis of the thickness and parallel with the surface of the substrate; and cladding surrounding each core and over the substrate, wherein an index of refraction of each core is greater than an index of refraction of cladding; wherein the resonator is a travelling wave resonator configured to propagate electromagnetic energy in only one direction.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 illustrates a cross section of one embodiment of a planar optical waveguide with two or more cores (PWGTPC);
Figure 2A illustrates a plan view of one embodiment of a disc resonator including PWGTPC;
Figure 2B illustrates a plan view of one embodiment of a ring resonator including PWGTPC;
Figure 3 illustrates a block diagram of one example, useful for understanding the invention only, of a resonator optical gyroscope including a travelling wave resonator including PWGTPC; and
Figure 4 illustrates one example, useful for understanding the invention only, of a method of operation of a resonator optical gyroscope including a travelling wave resonator including PWGTPC.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that structural, mechanical, and electrical changes may be made. Furthermore, the method presented in the drawing figures and the specification is not to be construed as limiting the order in which the individual steps may be performed. The following detailed description is, therefore, not to be taken in a limiting sense.

A travelling wave resonator including planar optical waveguide with two or more cores is provided. A travelling wave resonator means a resonator in which electromagnetic energy propagates in one direction, *e.g*., clockwise or counterclockwise around the travelling wave resonator. Types of travelling wave resonators include disc, ring, and racetrack resonators. The travelling wave resonator including planar optical waveguide with two or more cores may be used in a resonator optical gyroscope.

By having two or more cores in the planar optical waveguide, the cross-sectional area of a mode of an optical signal propagating in the planar optical waveguide is increased; thus, the optical intensity of the mode of the optical signal is reduced. Each core must be over another core in an axis substantially perpendicular to a substrate upon which the planar optical waveguide is formed. Most of the energy of the optical signal is propagated in cladding (surrounding the two or more cores) of the planar optical waveguide.

The optical Kerr effect is proportional to a product of (a) a non-linear coefficient of material, of the planar optical waveguide, in which the mode of the optical signal propagates and (b) an intensity of a mode, *e.g.,* a TE0 mode, of an optical signal propagating in the material. The non-linear coefficient means a change in an effective index of the mode as a function of electromagnetic power. By increasing an effective cross-sectional area of the mode of the optical signal propagating in a planar optical waveguide, the optical Kerr effect is diminished. The optical Kerr effect is inversely proportional to the effective cross-sectional area of the mode of the optical signal propagating in the planar optical waveguide. Thus, the effective cross-sectional area is increased by having two or more cores in the planar optical waveguide.

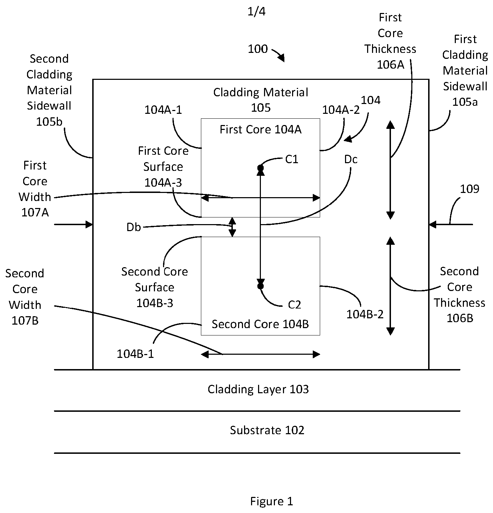

Figure 1 illustrates a cross section of one embodiment of a planar optical waveguide with two or more cores (or PWGTPC) 100. The PWGTPC 100 includes two or more cores 104 each of which has a core thickness (or core height) 106A, 106B and a core width 107A, 107B. The at least two cores 104 are stacked over in an axis of the core thickness, *i.e.,* in an axis perpendicular to the substrate. The cladding index of refraction is larger than an index of refraction of each core. For pedagogical purposes, the first core 104A and the second core 104B are illustrated as having the same width and thickness dimensions; however, in other embodiments, one or both of the width and thickness dimensions of two adjacent cores 104A, 104B may vary.

For pedagogical purposes, the PWGTPC 100 is illustrated with a first core 104A and a second core 104B. Each core 104A, 104B has a thickness (or height) which is less than or equal to five percent of the free space wavelength of the optical signal configured to be propagated by such planar optical waveguide. The thickness 106A, 106B of each adjacent core may be substantially equal or not substantially equal. The width 107A, 107B of each core may be substantially equal or not substantially equal. The first core 104A has a center C1 in the center of a cross section of the first core 104A, *i.e.,* midway between each of the first core width 107A and the first core thickness 106A. The second core 104B has a center C2 in the center of a cross section of the second core 104B, *i.e.,* midway between each of the second core width 107B and the second core thickness 106B.

Either one or both of the following is the case: (a) a surface of one core, *e.g.,* first core surface 104A-3, adjacent to a surface of another core, *e.g.,* second core surface 104B-3, is separated by a distance Db of more than twenty percent, *e.g.,* seventy five percent, of a free space wavelength of an optical signal configured to propagate in the planar optical waveguide, and (b) centers C1, C2 of cross sections, defined by a dimension of core width and a dimension of core thickness, of two adjacent cores should be separated by a distance Dc three or more times the free space wavelength configured to be propagated by such planar optical waveguide. Optionally, the first core surface 104A-3 and the second core surface 104B-3 are substantially parallel; further, optionally, each of the first core surface 104A-3 and the second core surface 104B-3 are substantially parallel to a surface of the substrate 102 which supports the PWGTPC 100.

Thickness means a dimension along an axis perpendicular (or orthogonal) to a surfaced of the substrate which supports the PWGTPC 100 (or planar optical waveguide). Width means a dimension along another axis substantially perpendicular to the axis of thickness and parallel with a surface of the substrate which supports the PWGTPC 100 (or the planar optical waveguide).

Each core 104A, 104B has a first core sidewall 104A-1, 104B-1 opposite a second core sidewall 104A-2, 104B-2. A core sidewall 104A-1, 104B-1, 104A-2, 104B-2 means a surface of a first or second core 104A, 104B which is substantially perpendicular to a surface of the substrate 102 which supports the PWGTPC 100 (or the planar optical waveguide).

Optionally, each core 104A, 104B includes silicon nitride; however, other materials can be used to form the core 104A, 104B. The PWGTPC 100 is surrounded by cladding material 105, *e.g.,* deposited over (or around) each core 104A, 104B, and a cladding layer 103, *e.g.,* over which each core 104A, 104B is formed. The cladding material 105 and the cladding layer 103 may be jointly referred to as cladding. Optionally, the cladding material 105 and the cladding layer 103 each comprise silicon dioxide; however, other material(s) can be used to form each of the cladding material 105 and/or the cladding layer 103. The index of refraction of the cladding must be higher than the index of refraction of each of the cores 104A, 104B to permit optical signals to be substantially confined within the PWGTPC 100, *e.g*., within the cladding; an optical signal propagating in the PWGTPC 100 is configured to be substantially confined within the cladding. The cladding layer 103 is formed on or over a surface of a substrate 102; the surface of the substrate 102 is configured to mechanically support the PWGTPC 100. Optionally, the substrate 102 may be an insulator (for example undoped silicon or glass).

The PWGTPC 100 has a width 109 which is a distance between a first cladding material sidewall 105a and a second cladding sidewall 105b of the PWGTPC 100. Each of the first cladding material sidewall 105a and the second cladding material sidewall 105b is substantially perpendicular to the cladding layer 103 and/or the substrate 102. A cladding material sidewall 105a, 105b means a surface of the cladding material 105 which is substantially perpendicular to the surface of the substrate 102 which mechanically supports the PWGTPC 100.

Embodiments of the invention may be a travelling wave resonator including PWGTPC 100 (or TWPWGTPC). Examples of such a travelling wave resonator are a disc resonator including, *e.g*., formed with, PWGTPC 100, a ring resonator including the PWGTPC 100, or a racetrack resonator including, *e.g*., formed with PWGTPC 100. A racetrack resonator includes two halves of a ring resonator joined by two substantially straight portions of PWGTPC 100.

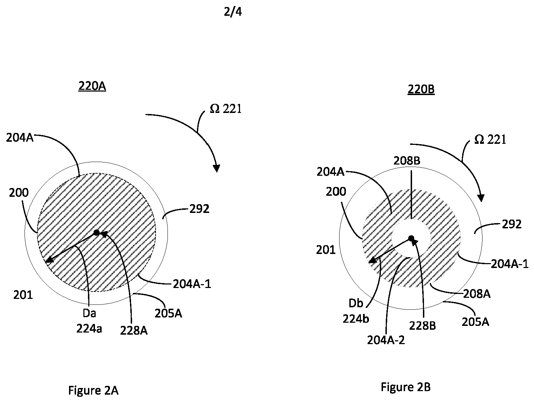

Figure 2A illustrates a plan view of one embodiment of a disc resonator including, *e.g*., formed with, PWGTPC 100 (or DRPWGTPC) 220A. The DRPWGTPC 220A includes PWGTPC 200 formed in a cross-sectional shape of a disc over a substrate 201. The DRPWGTPC 220 includes cladding 292 covering two cores. Because a plan view is used, only one core 204A is shown. The core 204A includes one, an exterior, core surface 204A-1. The DRPWGTPC 220A includes cladding 292 with only one, an exterior, cladding sidewall 205A. The DRPWGTPC 220A also includes a center axis (or rotation axis) 228A around which the DRPWGTPC 220A may be rotated at a rate of rotation (Ω) 221. The DRPPWGTPC 220A has a core diameter Da 224a extending from the center axis 228A to a, *e.g.,* each, core sidewall 204A-1.

Figure 2B illustrates a plan view of one embodiment of a ring resonator including, *e.g*., formed with, PWGTPC 100 (or RPWGTPC) 220B. The RPWGTPC 220B includes PWGTPC 200 formed in a cross-sectional shape of a ring over a substrate 201. Because a plan view is used, only one core 204A is shown. The core 204A includes an exterior core sidewall 204A-1 and an interior core sidewall 204A-2. The core 204A has an exterior sidewall 204A-1 and an interior sidewall 204A-2. The cladding has an exterior sidewall 205A and an interior sidewall 205B. The sidewalls described with respect to Figures 2A and 2B are substantially perpendicular to the surface of the substrate 201 which mechanically supports the corresponding travelling wave resonator. The RPWGTPC 220B also includes a center axis 228B around which the RPWGTPC 220B may be rotated at a rate of rotation (Ω) 221. The core 204A of the RPWGTPC 220B has an outer diameter Db 224b extending from the center axis 228B to the exterior sidewall 204A-1.

A racetrack resonator includes, *e.g*., formed with, PWGTPC 100. The racetrack resonator including the PWGTPC 100 also includes a center axis around which such racetrack resonator may be rotated at a rate of rotation (Ω). The mode of the optical signal is weakly or strongly confined to the cores of the resonators, *e.g*., illustrated in Figures 2A and 2B.

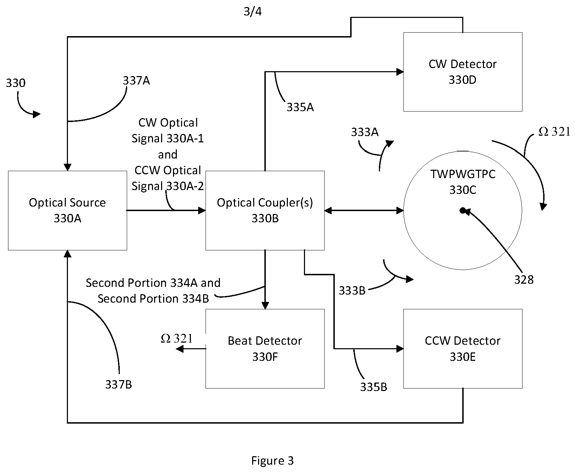

Figure 3 illustrates a block diagram of one example, useful for understanding the invention only, of a resonator optical gyroscope 330 including a TWPWGTPC. The resonator optical gyroscope 330 includes a TWPWGTPC 330C including a center axis (or rotation axis) 328 around which the resonator optical gyroscope 330 may rotate. Optionally, the TWPWGTPC 330C may be implemented using techniques described elsewhere herein, *e.g*., with respect to Figures 1, 2A, and 2B herein.

The resonator optical gyroscope 330 also includes an optical source 330A, at least one optical coupler (optical coupler(s)) 330B, a clockwise optical signal detector (CW detector or CW detector circuit) 330D, a counterclockwise optical signal detector (CCW detector or CCW detector circuit) 330E, and a beat detector (or beat detector circuit) 330F. Optionally, the beat detector may be implemented with optical, analog, and/or digital electronic circuitry. Optionally, the optical source 330A includes one or more lasers. The optical source 330A is configured to generate a clockwise (CW) optical signal 330A-1 and a counterclockwise (CCW) optical signal 330A-2. The optical source 330A is optically coupled to the optical coupler(s) 330B.

The optical coupler(s) 330B are also optically coupled to each of the TWPWGTPC 330C, the CW detector 330D, the CCW detector 330E, and the beat detector 330F. The optical coupler(s) 330B are configured to optically couple the CW optical signal 330A-1, received from the optical source 330A, into the TWPWGTPC 330C so that a portion 333A (of the CW optical signal 330A-1) circulates around the TWPWGTPC 330C in a CW direction. The optical coupler(s) 330B are further configured to optically couple the CCW optical signal 330A-2, received from the optical source 330A, into the TWPWGTPC 330C so that a portion 333B (of the CCW optical signal 330A-2) circulates around the TWPWGTPC 330C in a CCW direction. Optionally, each optical coupler includes, *e.g.,* is formed by, a planar optical waveguide, e.g., configured to support a TE mode, for example TE0 mode, having a portion whose core is adjacent to cores of the TWPWGTPC 330C.

The optical coupler(s) 330B are also configured to optically couple, a first portion 335A of the portion 333A (of the CW optical signal 330A-1) circulating around the TWPWGTPC 330C in the CW direction, to the CW detector 330D. Optionally, each of the CW detector 330D and the CCW detector 330E may be a detector, *e.g.,* a photodiode, configured to determine incident optical power level. Each of the CW detector 330D and the CCW detector 330E is coupled to the optical source 330A. The CW detector 330D provides a CW control signal 337A to the optical source 330A indicative of a power level of the first portion 335A. The optical coupler(s) 330B are also configured to optically couple, a first portion 335A of the portion 333A (of the CW optical signal 330A-1) circulating around the TWPWGTPC 330C in the CW direction, to the CW detector 330D. The optical coupler(s) 330B are also configured to optically couple, a first portion 335B of the portion 333B (of the CCW optical signal 330A-2) circulating around the TWPWGTPC 330C in the CCW direction, to the CCW detector 330E. The CCW detector 330E provides a CCW control signal 337B to the optical source 330A indicative of a power level of the first portion 335A. When the resonator optical gyroscope 330 is rotated around its center axis 328, the resonant frequencies in each of the CW and CCW directions are separated (or become different) due to the Sagnac effect. The optical source 330A is configured to use the CW control signal 337A to adjust a carrier frequency of the CW optical signal 330A-1 to be equal to the resonant frequency of TWPWGTPC 330C in the CW direction including accounting for changes in the resonant frequency due to a rotation rate 321 around the center axis 328. The optical source 330A is configured to use the CCW control signal 337B to adjust a carrier frequency of the CCW optical signal 330A-2 to be equal to the resonant frequency of TWPWGTPC 330C in the CCW direction including accounting for changes in the resonant frequency due to the rotation rate 321 around the center axis 328.

The optical coupler(s) 330B are also configured to optically couple, to the beat detector 330F, a second portion 334A of the portion 333A (of the CW optical signal 330A-1) circulating CW around the TWPWGTPC 330C and a second portion 334B of the portion 333B (of the CCW optical signals 333A-2) circulating CCW around the TWPWGTPC 330C. The beat detector 330F is configured to determine a rate of rotation 321 around the center axis 328 of the TWPWGTPC 330C. The rate of rotation 321 is a function of a difference (or beat), Δf, of a carrier frequency of the second portion 334A of the portion 333A (of the CW optical signal 330A-1) circulating CW around the TWPWGTPC 330C and a carrier frequency of the second portion 334B of the portion 333B (of the CCW optical signal 330A-2) circulating CCW around the TWPWGTPC 330C. Optionally, the rate of rotation 321 may also be a function of dimensions of the TWPWGTPC 330C, *e.g.,* a diameter, *e.g.,* the core diameter D 224a, 224b, of the TWPWGTPC, an average wavelength, λ, of the CW optical signal 330A-1 and the CCW optical signal 330A-2, and a refractive index, n, of the TWPWGTPC 330C, *e.g.,* of the cladding in the TWPWGTPC 330C. For each of the DRPWGTPC 220A and the RPWGTPC 220B, the rate of rotation 321 around the rotation axis 328 of the TWPWGTPC 330C is: $Ω = \left(Δf*n*λ\right) / D$ Equations for other travelling wave resonators, *e.g*., a racetrack resonator, may differ.

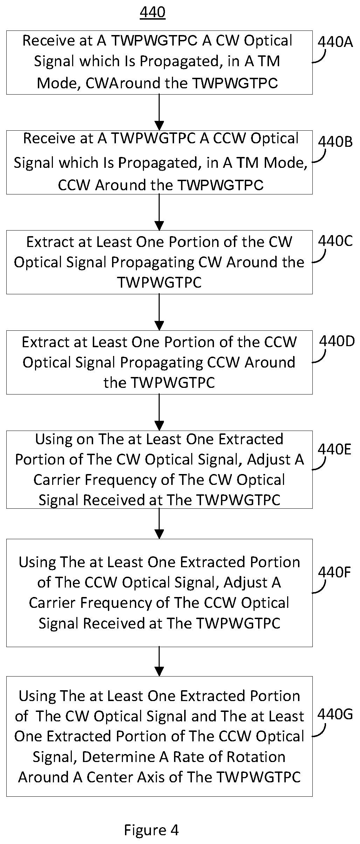

Figure 4 illustrates a flow diagram of one example, useful for understanding the invention only, of a method 440 of operation of a resonator optical gyroscope including a TWPWGTPC. To the extent that the methods shown in any Figures are described herein as being implemented with any of the systems illustrated herein, it is to be understood that other examples can be implemented in other ways. Optionally, method 440 may be implemented by TWPWGTPC described with respect to Figures 1-2B. The blocks of the flow diagrams have been arranged in a generally sequential manner for ease of explanation; however, it is to be understood that this arrangement is merely exemplary, and it should be recognized that the processing associated with the methods (and the blocks shown in the Figures) can occur in a different order (for example, where at least some of the processing associated with the blocks is performed in parallel and/or in an event-driven manner).

In block 440A, a CW optical signal is received at a TWPWGTPC and propagated, *e.g*., in a TE mode (for example a TE0 mode), clockwise around the TWPWGTPC. Optionally, the TWPWGTPC may be implemented as described elsewhere herein. In block 440B, a CCW optical signal is received at a TWPWGTPC and propagated, for example a TE mode (for example a TE0 mode), counterclockwise around the TWPWGTPC.

In block 440C, at least one portion of the CW optical signal propagating clockwise around the TWPWGTPC is extracted from the TWPWGTPC. Optionally, the at least portion of the CW optical signal propagating clockwise around the TWPWGTPC includes a first extracted portion and a second extracted portion of the CW optical signal propagating around the TWPWGTPC.

In block 440D, at least one portion of the CCW optical signal propagating counterclockwise around the TWPWGTPC is extracted from the TWPWGTPC. Optionally, the at least portion of the CCW optical signal propagating clockwise around the TWPWGTPC includes a first extracted portion and a second extracted portion of the CCW optical signal propagating around the TWPWGTPC.

In block 440E, using the at least one extracted portion of the CW optical signal, a carrier frequency of the CW optical signal, received at the TWPWGTPC, is adjusted to equal a CW resonant frequency of the TWPWGTPC. Optionally, the first extracted portion of the CW optical signal propagating clockwise around the TWPWGTPC is used to adjust the carrier frequency of the CW optical signal, received at the TWPWGTPC, to equal the CW resonant frequency of the TWPWGTPC.

In block 440F, using the at least one extracted portion of the CCW optical signal, a carrier frequency of the CCW optical signal, received at the TWPWGTPC, is adjusted to equal a CCW resonant frequency of the TWPWGTPC. Optionally, the first extracted portion of the CCW optical signal propagating clockwise around the TWPWGTPC is used to adjust the carrier frequency of the CCW optical signal, received at the TWPWGTPC, to equal the CCW resonant frequency of the TWPWGTPC.

In block 440G, using a carrier frequency of the at least one extracted portion of the CW optical signal and a carrier frequency of the at least one extracted portion of the CCW optical signal, a rate of rotation around a center axis of the TWPWGTPC is determined. Optionally, the rate of rotation around the TWPWGTPC may be implemented as described elsewhere herein. Optionally, the carrier frequency of the second extracted portion of the CW optical signal and the carrier frequency of the second extracted portion of the CCW optical signal are used to determine the rate of rotation of the resonator optical gyroscope around a center axis of the TWPWGTPC.

Terms of relative position as used in this application are defined based on a plane parallel to, or in the case of the term coplanar - the same plane as, the conventional plane or working surface of a layer, wafer, or substrate, regardless of orientation. The term "horizontal" or "lateral" as used in this application are defined as a plane parallel to the conventional plane or working surface of a layer, wafer, or substrate, regardless of orientation. The term "vertical" refers to a direction perpendicular to the horizontal. Terms such as "on," "side" (as in "sidewall"), "higher," "lower," "over," "top," and "under" are defined with respect to the conventional plane or working surface being on the top surface of a layer, wafer, or substrate, regardless of orientation. The term "coplanar" as used in this application is defined as a plane in the same plane as the conventional plane or working surface of a layer, wafer, or substrate, regardless of orientation.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims.

## Claims

1. A resonator configured to be mounted over a surface of a substrate (102), comprising:
planar optical waveguide (100) comprising:
at least two cores (104), wherein the at least two cores are stacked in an axis perpendicular to the substrate, wherein at least one of: (a) a surface of one core adjacent to a surface of another core is separated by a first distance (D_{b}) of more than twenty percent of a free space wavelength of an optical signal configured to propagate in the planar optical waveguide and (b) centers of each cross section, defined by core width and core thickness, of two adjacent cores are separated by a second distance (D_{c}) three or more times the free space wavelength of the optical signal configured to be propagated in the planar optical waveguide;
wherein each core (104) has a thickness (107) which is less than or equal to five percent of a free space wavelength of an optical signal configured to propagate in the planar optical waveguide, wherein the thickness means a dimension along an axis perpendicular to the surface, of the substrate, under the resonator, and wherein width means a dimension along another axis substantially perpendicular to the axis of the thickness and parallel with the surface of the substrate; and
cladding (105) surrounding each core and over the substrate, wherein an index of refraction of each core is greater than an index of refraction of cladding;
wherein the resonator is a travelling wave resonator configured to propagate electromagnetic energy in only one direction.

2. The resonator of claim 1, wherein the surface of the one core (104) adjacent to the surface of another core (104) is separated by the first distance (D_{b}) of more than seventy five percent of the free space wavelength of the optical signal configured to propagate in the planar optical waveguide.

3. The resonator of claims 1 or 2, wherein the cores comprise silicon nitride.

4. The resonator of any of claims 1 to 3, wherein the cladding comprises silicon dioxide.

5. The resonator of any of claims 1 to 4, wherein travelling wave resonator is one of a ring resonator (220B), a disc resonator (220A), and a racetrack resonator.

6. The resonator of any of claims 1 to 5, further comprising the substrate (102).

## Patentansprüche

1. Resonator, der dazu konfiguriert ist, über einer Fläche eines Substrats (102) montiert zu sein, umfassend:
einen planaren optischen Wellenleiter (100), umfassend:
mindestens zwei Kerne (104), wobei die mindestens zwei Kerne in einer Achse senkrecht zu dem Substrat gestapelt sind, wobei mindestens eines von Folgendem gilt: (a) eine Fläche eines Kerns, die zu einer Fläche eines anderen Kerns benachbart ist, ist durch einen ersten Abstand (D_{b}) von mehr als zwanzig Prozent einer Freiraumwellenlänge eines optischen Signals getrennt, das dazu konfiguriert ist, sich in dem planaren optischen Wellenleiter auszubreiten, und (b) Mittelpunkte jedes durch eine Kernbreite und Kerndicke definierten Querschnitts von zwei benachbarten Kernen sind durch einen zweiten Abstand (D_{c}) von einem Drei- oder Mehrfachen der Freiraumwellenlänge des optischen Signals getrennt, das dazu konfiguriert ist, sich in dem planaren optischen Wellenleiter auszubreiten;
wobei jeder Kern (104) eine Dicke (107) aufweist, die kleiner als oder gleich fünf Prozent einer Freiraumwellenlänge eines optischen Signals ist, das dazu konfiguriert ist, sich in dem planaren optischen Wellenleiter auszubreiten, wobei die Dicke eine Dimension entlang einer Achse senkrecht zu der Fläche des Substrats unter dem Resonator bezeichnet, und wobei Breite eine Dimension entlang einer anderen Achse bezeichnet, die im Wesentlichen senkrecht zu der Achse der Dicke und parallel zu der Fläche des Substrats ist; und
eine Verkleidung (105), die um jeden Kern und über dem Substrat liegt, wobei ein Brechungsindex jedes Kerns größer ist als ein Brechungsindex der Verkleidung;
wobei der Resonator ein Wanderwellenresonator ist, der dazu konfiguriert ist, elektromagnetische Energie in nur eine Richtung auszubreiten.

2. Resonator nach Anspruch 1, wobei die Fläche des einen Kerns (104), die zu der Fläche eines anderen Kerns (104) benachbart ist, durch den ersten Abstand (D_{b}) von mehr als fünfundsiebzig Prozent der Freiraumwellenlänge des optischen Signals getrennt ist, das dazu konfiguriert ist, sich in dem planaren optischen Wellenleiter auszubreiten.

3. Resonator nach den Ansprüchen 1 oder 2, wobei die Kerne Siliziumnitrid umfassen.

4. Resonator nach einem der Ansprüche 1 bis 3, wobei die Verkleidung Siliziumdioxid umfasst.

5. Resonator nach einem der Ansprüche 1 bis 4, wobei der Wanderwellenresonator einer von einem Ringresonator (220B), einem Scheibenresonator (220A) und einem Racetrack-Resonator ist.

6. Resonator nach einem der Ansprüche 1 bis 5, ferner umfassend das Substrat (102).

## Revendications

1. Un résonateur configuré pour être monté sur une surface d'un substrat (102), comprenant :
un guide d'ondes optique plan (100) comprenant :
au moins deux cœurs (104), dans lequel les au moins deux cœurs sont empilés selon un axe perpendiculaire au substrat, dans lequel au moins l'un de : (a) une surface d'un cœur adjacent à une surface d'un autre cœur est séparée par une première distance (D_{b}) de plus de vingt pour cent d'une longueur d'onde en espace libre d'un signal optique configuré pour se propager dans le guide d'ondes optique plan, et (b) des centres de chaque section transversale, définis par la largeur de cœur et l'épaisseur de cœur, de deux cœurs adjacents sont séparés par une deuxième distance (D_{c}) d'au moins trois fois la longueur d'onde en espace libre du signal optique configuré pour être propagé dans le guide d'ondes optique plan ;
dans lequel chaque cœur (104) présente une épaisseur (107) qui est inférieure ou égale à cinq pour cent d'une longueur d'onde en espace libre d'un signal optique configuré pour se propager dans le guide d'ondes optique plan, dans lequel l'épaisseur signifie une dimension le long d'un axe perpendiculaire à la surface, au substrat, sous le résonateur, et dans lequel la largeur signifie une dimension le long d'un autre axe substantiellement perpendiculaire à l'axe d'épaisseur et parallèle à la surface du substrat ; et
une gaine (105) entourant chaque cœur et sur le substrat, dans laquelle un indice de réfraction de chaque cœur est supérieur à un indice de réfraction de la gaine ;
dans lequel le résonateur est un résonateur à ondes progressives configuré pour propager de l'énergie électromagnétique dans une seule direction.

2. Résonateur selon la revendication 1, dans lequel la surface du cœur (104) adjacent à la surface de l'autre cœur (104) est séparée par la première distance (D_{b}) de plus de soixante-quinze pour cent de la longueur d'onde en espace libre du signal optique configuré pour se propager dans le guide d'ondes optique plan.

3. Résonateur selon la revendication 1 ou 2, dans lequel le cœur comprend du nitrure de silicium.

4. Résonateur selon l'une quelconque des revendications 1 à 3, dans lequel la gaine comprend du dioxyde de silicium.

5. Résonateur selon l'une quelconque des revendications 1 à 4, dans lequel le résonateur à ondes progressives est l'un d'un résonateur en anneau (220B), d'un résonateur à disque (220A) et d'un résonateur à piste de course.

6. Résonateur selon l'une quelconque des revendications 1 à 5, comprenant en outre le substrat (102).
